# EUROPÄISCHE PATENTSCHRIFT

(11) **EP 2 602 276 B1**
(45) Veröffentlichungstag und Bekanntmachung des Hinweises auf die Patenterteilung: **29.07.2015**
(21) Anmeldenummer: 11009703.7
(22) Anmeldetag: 08.12.2011
(51) Int. Cl.: C08G 69/16, C08J 11/14

(54) **Verfahren und Vorrichtung zur Aufbereitung von hoch wasserhaltigem Recyclingcaprolactam bei der kontinuierlichen Herstellung von Polyamid 6**
Method and device for treating recycling caprolactam with a high water content in the continuous production of polyamide 6
Procédé et dispositif de préparation de caprolactame de recyclage à teneur élevée en eau lors de la fabrication continue de polyamide 6

(43) Veröffentlichungstag der Anmeldung: 12.06.2013
(73) Patentinhaber: PE Polymer Engineering Plant Construction GmbH, 07407 Rudolstadt (DE)
(72) Erfinder: Wiltzer, Jürgen, 07422 Bad Blankenburg (DE); Morgenstern, Gunda, Dr., 07318 Saalfeld (DE)
(74) Vertreter: Feldkamp, Rainer

(56) Entgegenhaltungen:
- EP-A1- 0 608 454
- EP-B1- 0 847 415
- WO-A1-2005/123807

## Beschreibung

Bei der Polykondensation von Polyamid 6 stellt sich ein chemisches Gleichgewicht zwischen höher kondensierten polymeren Molekülen, niedrig kondensierten dimeren und oligomeren Molekülen, nicht umgesetzten ε-Caprolactam und freiem Wasser ein.

In Abhängigkeit von den verfahrenstechnischen Bedingungen der Prozessführung - wie Druck, Temperatur, Verweilzeit, Entgasung - kann der Polykondensationsgrad der Polyamid-6-Moleküle stark beeinflusst werden. Der oligomere und monomere Anteil liegt im chemischen Gleichgewicht, jedoch immer in der Größenordnung von 8-13%.

Dieser niedrigmolekulare Rohstoffanteil wird durch Extraktion mit Wasser aus dem Polyamid entfernt.

Der anfallende wässrige und niedrigmolekulare Extrakt wird in vielen Verfahren verworfen oder nicht mehr als Rohstoff für hochwertige Polyamidprodukte genutzt.

Die Ursache liegt darin begründet, dass die im Extrakt enthaltenen zyklischen Dimeren des Caprolactams sehr hohe Schmelzpunkte von 350°C haben und sich nicht in den Polyamidschmelzen lösen.

Bei der Verarbeitung von Polyamiden mit erhöhten Anteilen an zyklischen Dimeren treten deutliche Qualitätsminderungen in der Verarbeitung und in den Endprodukten auf.

Aus der EP 0 847 415 B1 ist ein Verfahren zur Aktivierung und zum 100%igen Wiedereinsatz dieses Rohstoffextraktes in einer Polykondensation bekannt. Bei diesem Verfahren werden alle anfallenden extrakthaltigen Prozessabwässer bis auf max. 85% Extrakt = "Recyclingcaprolactam" bei 130°C konzentriert und gelagert. Höhere Konzentrationen, erforderliche höhere Lösungstemperaturen und auch längere Lagerzeiten des Recyclingcaprolactams führen zu unkontrollierten und technisch nicht beherrschbaren Polykondensationsreaktionen vor der Verarbeitung. Da dieses 85%ige wässrige Recyclingcaprolactam hohe Anteile an zyklischen Oligomeren - unter anderem an sehr stabilen zyklischen Dimeren - enthält, werden bei dem bekannten Verfahren vor Einspeisung des Recyclingcaprolactams in die primäre Druck-Vorpolymerisationsstufe des Polykondensationsprozesses die zyklischen Oligomere und insbesondere Dimere in einer Druckstufe durch Hydrolyse reaktionsfähig gespalten. Hierbei sollen die zyklischen energiearmen Moleküle des Recyclingrohstoffes durch Anbindung von Wasser zu aliphatischen, reaktionsfreudigen Molekülen, die wieder an der Polykondensation teilnehmen, aktiviert werden.

Die Hydrolyse-Stufe wird in dem genannten Verfahren nicht entgast. Bei mengenmäßig geringer Einspeisung des hydrolysierten Extraktes in das Gesamtverfahren und der damit resultierenden Wasserbilanz ist eine Entgasung nicht zwingend erforderlich. Eine Entgasung würde aufgrund des hohen Dampfdruckes von Caprolactam bei den anliegenden Temperaturen ≥200°C zu Caprolactamverlusten führen. Daher wird die gesamte freie und chemisch gebundene Wassermenge, die mit dem Recyclingcaprolactam in den "Dimerenhydrolysator" eingebracht worden ist, in den nachfolgenden Vorpolymerisationsreaktor eingetragen.

Damit werden die verfahrenstechnischen Startbedingungen für eine Polykondensation in dem Vorpolymerisator nach diesem Verfahren erfüllt. In der Folge können sich die unterschiedlichsten Nachkondensationsreaktoren in einer Kaskade an den Vorpolymerisator anschließen. Für die Einstellung eines relativ niedrigen Durchschnitts-Polymerisationsgrades aus dem Vorpolymerisat in dem Endprodukt ist die Kopplung mit einem Nachkondensator ausreichend, bei dem das freie Wasser am Reaktorkopf des Nachkondensators ausgedampft wird. Schwieriger gestaltet sich die Apparateanordnung für die Einstellung von höheren Kondensationsgraden aus der vorgelegten niedrigkondensierten Schmelze nach dem ersten Nachkondensator. Hier genügt es nicht, nur einen Nachkondensator einzusetzen, da die Einstellung eines chemischen Gleichgewichtes mit höheren Kondensationsgraden nur über das Austreiben des zuvor gebundenen Wassers möglich ist. Für ein verstärktes und gleichmäßiges Austreiben des frei werdenden Wassers aus der Schmelze müssen geeignete technische Einbauten mit großen Oberflächen und wirksame Zwangsströmungen der Gasphase im Reaktorkopf der Nachkondensatoren geschaffen werden.

Das Anlegen eines Unterdruckes an den Nachkondensatoren führt zwar ebenso zu einer erhöhten Abführung von Wasser aus der Polymerschmelze, bringt jedoch auch den erheblichen Nachteil, dass geringste Undichtigkeiten in dem Reaktorsystem zur Sauerstoffschädigung des Polyamides führen. Die alleinige Anwendung von höheren Prozesstemperaturen zur Wasserentgasung von ≥265°C in den Nachkondensatoren ist aufgrund der ablaufenden chemischen Parallelreaktionen bzw. der Bildung von radikalisch initiierten oxidativen Zuständen in der Schmelze nicht erfolgreich.

Daher muss bei dem bekannten Verfahrens das 85%ige Recyclingcaprolactam nach der Aufbereitung immer mit dem erhöhten freien Wassergehalt von 15% in die Dimerenhydrolyse eingespeist werden, und das Einsatzverhältnis Recyclingcaprolactam zu Frischcaprolactam muss immer auf maximal 10% des Durchsatzes der gesamten Polykondensationslinie eingeschränkt werden. Eine sofortige Entgasung nach Eintragen des Recyclingcaprolactams in die Dimerenhydrolyse würde beträchtliche Monomerenverluste zur Folge haben;

Damit sind Wassergehalte von ≤1,5% bei Einspeisung des gesamten aufbereiteten 85%igen Recyclingcaprolactams einer technischen Polymerlinie in den Vorpolymerisator nicht realisierbar, und die hohen Anteile an chemisch gebundenem Wasser, die in dem hydrolysierten Prepolymerisat des Dimerenhydrolysators enthalten sind, beeinflussen in dem Vorpolymerisator das chemische Gleichgewicht der Polykondensationsreaktion, so dass höhere Durchschnittspolymerisationsgrade im Endprodukt aus dem niedrig kondensierten Vorpolymerisat nur über eine Kaskadenanordnung von speziell ausgerüsteten Nachkondensatoren einstellbar sind.

Diese Einschränkungen sind in kontinuierlich arbeitenden Großanlagen nicht mehr akzeptabel.

Der Erfindung liegt die Aufgabe zugrunde, ein Verfahren und eine Vorrichtung zur Aufbereitung von hoch wasserhaltigem Recyclingcaprolactam zu schaffen, das bzw. die den Einsatz eines deutlich erhöhten Recyclingcaprolactamanteils ermöglicht, ohne dass diese Polykondensationskaskade durch weitere Nachkondensatoren ergänzt werden muss.

Diese Aufgabe wird durch die im Patentanspruch 1 bzw..14 angegebenen Merkmale gelöst.

Vorteilhafte Ausgestaltungen und Weiterbildungen der Erfindung ergeben sich aus den Unteransprüchen.

Bei dem erfindungsgemäßen Verfahren werden die zyklischen Verbindungen insbesondere die energiearmen zyklischen Dimeren und Oligomeren in dem zurückgewonnenen ε-Caprolactam durch eine stufenweise Hydrolyse weitestgehend aktiviert, wobei der Wassergehalt durch gesteuerte Entgasung reduziert und eine Prepolymerisation durch Kondensation der aktivierten Moleküle eingeleitet wird.

Auf diese Weise können Forderungen, in PA6-Produktionsanlagen einen deutlich erhöhten Recyclingcaprolactamanteil in der Primärlinie einer jeweiligen Polykondensationskaskade einzusetzen und die Einstellung von variablen Hochleistungs-Polymerqualitäten mit niedrig- und mittelviskosen Polykondensationsgraden vornehmen zu können, erfüllt werden.Die Polykondensationskaskade muss dabei nicht durch weitere Nachkondensatoren ergänzt werden. Ebenso ist das Betreiben weiterer Polykondensationslinien, in die kein Recyclingcaprolactam eingespeist wird und die deshalb mit deutlich höherem Durchschnittspolykondensationsgrad betrieben werden können, möglich.

Durch die Anordnung unterschiedlich aufgebauter Reaktoren ist es möglich, einen gleichmäßigen Wasseraustrag zu erreichen und die Einstellung eines gewünschten Polykondensationsgrades in einer vorgegebenen Verweilzeit in der Schmelze zu ermöglichen.

Bei dem erfindungsgemäßen Verfahren bzw, der Vorrichtung werden die zyklischen Verbindungen, insbesondere die energiearmen zyklischen Dimeren und Oligomeren, in dem zurückgewonnenen ε-Caprolactam durch eine stufenweise Hydrolyse weitestgehend aktiviert, der Wassergehalt wird durch eine gesteuerte Entgasung reduziert und es wird eine damit gekoppelte Prepolymerisation durch Kondensation der aktivierten Moleküle eingeleitet.

Prinzipiell werden bei dieser Verfahrenstechnologie die in Untersuchungen festgestellten Einflussfaktoren auf das chemische Gleichgewicht der zyklischen Verbindungen, insbesondere der zyklischen Dimeren, berücksichtigt. Hiernach steigt die Reaktionsgeschwindigkeit der Hydrolyse bei hohen Wassergehalten, gleichzeitig stellt sich aber eine relativ hohe Gleichgewichtskonzentration der zyklischen Verbindungen ein.

Bei der Behandlung des wasserhaltigen Recyclingcaprolactams entsprechend der erfindungsgemäßen Verfahrenstechnologie wird daher in einem optimalen Bereich hinsichtlich Wassergehalt, Hydrolysegeschwindigkeit und Konzentration der zyklischen Verbindungen, insbesondere der zyklischen Dimeren, gearbeitet.

Diese gekoppelten Hydrolyse-, Entgasungs- und Prepolymerisationsreaktionen sind vor dem Druck-Vorpolymerisator in einer kontinuierlich arbeitenden PA6-Polykondensationskaskade angeordnet.

Bei dem erfindungsgemäßen Stufenhydrolyseverfahren wird durch die verlängerte Verweilzeit des 85%igen Recyclingcaprolactams unter Temperatur und Druck abgesichert, dass eine weitestgehende Hydrolyse und damit Aktivierung aller zyklischen Verbindungen des Recyclingcaprolactams erreicht und eine Prepolymerisation eingeleitet wird.

Weiterhin wird durch die Steuerung der Wasserentgasung eine Einspeisung von mehr als 10% des 85%igen Recyclingcaprolactams als Hydrolyse-Prepolymerisat in einer jeweilige Polykondensationslinie möglich.

Durch die gesteuerte Entgasung des 85%igen Recyclingcaprolactams wird auch die Einstellung von weniger als 15% freiem Wasser in dem sich bildenden Hydrolyse-Prepolymerisat möglich, so dass der Wassergehalt in dem Hydrolyse-Prepolymerisat auf das Erreichen des gewünschten Durchschnittspolymerisationsgrades der PA6-Polykondensationslinie einstellbar ist.

Es konnte nachgewiesen werden, dass die Hydrolysestufe verlustarm entgast werden kann, wenn durch die Vorbehandlung des Recyclingcaprolactams der Gehalt an zyklischen Monomeren im Recyclingcaprolactam auf 30% oder kleiner eingestellt worden ist.

Die Absenkung des Monomerengehaltes in dem wässrigen Prepolymerisat führt im chemischen Gleichgewicht zu einem Reaktionsgemisch mit Schmelzpunkten, die in Abhängigkeit vom Wassergehalt des Prepolymerisates zwischen 150°C bis 195°C liegen. Damit kann das Prepolymerisat bei den eingestellten Temperaturen wie eine Schmelze behandelt werden. Im Dimerenhydrolysator wird das Prepolymerisat durch die ablaufenden Hydrolyse- und Kondensationsreaktionen in der Viskosität weiter erhöht, so dass gesicherte Schmelzpunkte von 195°C bis 210°C erreicht werden.

Bei Erreichen eines Hydrolysezustandes an zyklischen Monomeren von 25% oder kleiner im Recyclingcaprolactam können die Rohstoffverluste beim Entgasen weiter minimiert werden.

Die Geschwindigkeit zur Einstellung eines verlustarmen entgasbaren Zustandes im Recyclingcaprolactam ist von der Produkttemperatur abhängig. Die optimalen Produkttemperaturen für eine ausreichende Reaktionsgeschwindigkeit der Hydrolyse liegen im Bereich 240°C-270°C.

Das erfindungsgemäße Verfahren läuft damit in folgenden grundsätzlichen Schritten ab:
1. Das zurückgewonnene Recyclingcaprolactam mit einer Konzentration von 85% Extrakt wird in einem Vorwärmsystem auf die Hydrolysetemperatur 220°C oder mehr und vorzugsweise auf 240°C-270°C) vorgewärmt.
2. Das auf Hydrolysetemperatur vorgewärmte Recyclingcaprolactam wird dem Hydrolysator über eine spezielle Diffusoreinrichtung zugeführt. In diesem Diffusor erweitert sich der Schmelzeauslauf in den konischen Trichter zum Schmelzeeintritt in den Hydrolysator signifikant.
   Die Geometrie des speziellen Diffusors zeichnet sich durch ein in Abhängigkeit von den zu verdampfenden Wassermengen aus der Schmelze eingestelltem Winkel-Höhen-Verhältnis des konischen Auslaufes aus.
3. Das vorgewärmte schaumige Produkt wird über den Diffusor in den Hydrolysator geleitet, in dem die hoch wasserhaltige Schmelze weiterbehandelt wird.
4. In dem Hydrolysator ist die Produkttemperatur auf die Hydrolysetemperatur im Bereich von 240-270°C einzustellen und zu halten.
5. In dem Hydrolysator laufen entsprechend der geregelten Bedingungen - Temperatur, Druck - zwei parallele Hauptreaktionen ab: Hydrolyse der zyklischen Verbindungen - insbesondere der Dimeren - und Prepolymerisation der aktivierten Polyamidbildner.

Gemäß einer bevorzugten Ausführungsform des Verfahrens werden die Hydrolyse und Prepolymerisation des hoch wasserhaltigen Recyclingcaprolactams in mindestens zwei Stufen durchgeführt, wobei über die Durchführung der Wasserentgasung im zweiten Reaktor Verluste an Monomeren mit dem Kondensat niedrig gehalten werden.

Alternativ kann einer weiteren Ausführungsform bei sehr hohen Drücken bis 50 bar der gewünschte Wassergehalt der Schmelze über eine sofortige Entgasung des Kondensats unter Regelung des Systemdrucks eingestellt werden. Die hohen Entgasungsverluste an Monomeren führen jedoch bei sofortiger Entgasung selbst bei vollständiger Zuleitung des Kondensats in die Rückgewinnungsanlage zu einer schlechteren Materialbilanz und erhöhten Aufbereitungskosten.

Die bei der Entgasung mit dem Kondensat ausgetragenen Monomeren werden der Rückgewinnungsanlage zugeführt und mit dem Extraktwasser wieder zu Recyclingcaprolactam aufgearbeitet.

Der Monomerenverlust bei der Entgasung ist abhängig von der aktuellen Produkttemperatur und dem geregelt eingestellten Systemdruck des Hydrolysators.

Die ermittelten Caprolactamverluste beim Entgasen konnten in technischen Versuchen in kontinuierlich arbeitenden Polykondensationsanlagen unter verschiedenen Bedingungen nachgewiesen werden:
Die durchschnittlichen Abbauraten aller zyklischen Verbindungen aus dem Recyclingcaprolactam betragen je nach eingestellter Produkttemperatur im Hydrolysator ca. 75%-86%. Damit kann man davon ausgehen, dass in dem hydrolysierten Prepolymerisat nur noch ca. 14%-25% der ursprünglichen zyklischen Verbindungen in den Vorpolymerisator eingeleitet werden.

Die Hydrolyse-Prepolymerisation kann als einstufiges Verfahren in unterschiedlich aufgebauten Reaktoren und als zweistufiges Verfahren in zwei speziellen Reaktoren durchgeführt werden.

Die Erfindung wird nachfolgend anhand von Ausführungsbeispielen noch näher erläutert.

In den in der Zeichnung dargestellten Ausführungsbeispielen werden dazu Varianten für den Aufbau der technischen Aggregate, die einzustellende Verfahrenstechnologie und die Stoffstromführung dargelegt.

In der Zeichnung zeigen:

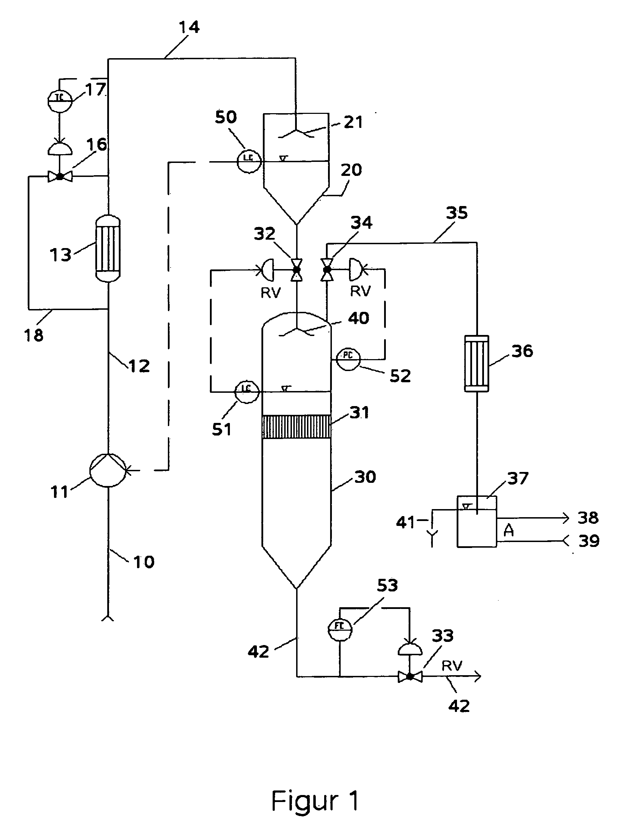

Fig. 1 ein erstes Ausführungsbeispiel einer Anlage zur Durchführung eines Verfahrens zur zweistufigen Hydrolyse von Recylingcaprolactam;

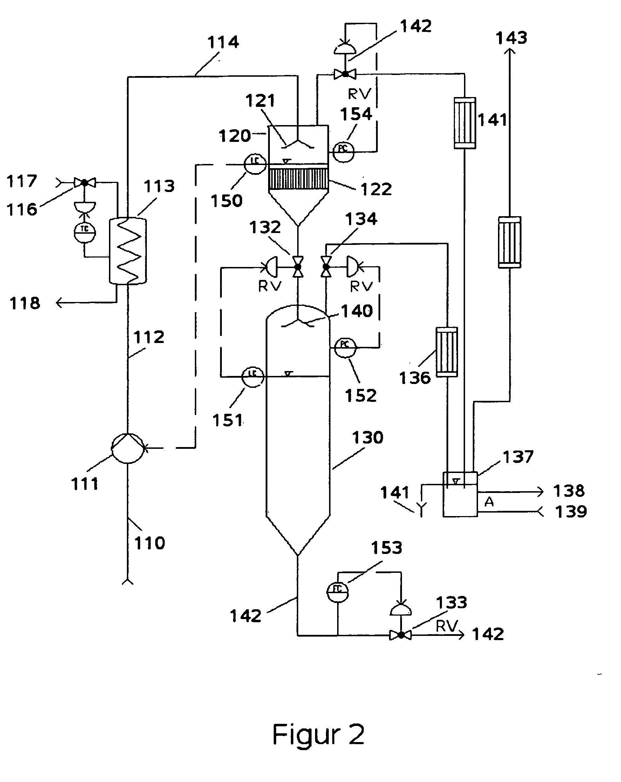

Fig. 2 ein zweites Ausführungsbeispiel einer Anlage zur Durchführung eines Verfahrens zur zweistufigen Hydrolyse von Recylingcaprolactam;

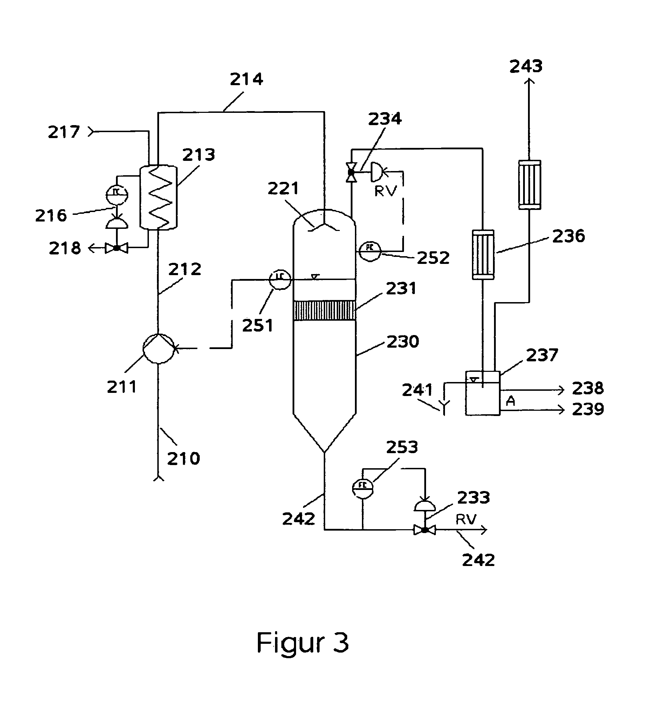

Fig. 3 ein drittes Ausführungsbeispiel einer Anlage zur Durchführung eines Verfahrens zur einstufigen Hydrolyse von Recylingcaprolactam;

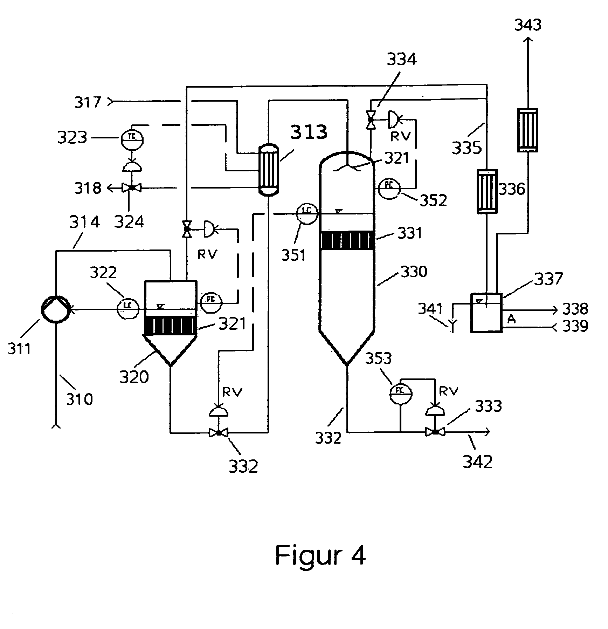

Fig. 4 ein viertes Ausführungsbeispiel einer Anlage zur Durchführung eines Verfahrens zur zweistufigen Hydrolyse von Recylingcaprolactam.
Fig. 5 ein fünftes Ausführungsbeispiel einer Anlage zur Durchführung eines Verfahrens zur zweistufigen Hydrolyse von Recylingcaprolactam.

In den Zeichnungen sind Ausführungsbeispiele von erfindungsgemäßen Anlagen zur Durchführung von Ausführungsformen des erfindungsgemäßen Verfahrens zur Hydrolyse von Recylingcaprolactam gezeigt, wobei einander entsprechende Anlagenteile mit jeweils um 100, 200. 300 bzw. 400 erhöhten Bezugsziffern bezeichnet sind.

### Ausführungsbeispiel I

### Zweistufen-Hydrolyse mit Vorwärmsystem ohne Verweilzeiteinstellung und Entgasung in dem zweiten Hydrolysereaktor

Für die Herstellung des PA6 in einer kontinuierlichen Polykondensationslinie wird ein 85%iges Recyclingcaprolactam mit durchschnittlich 85% Extrakt und 15% freiem Wasser eingesetzt.

Über eine Leitung 10 und eine beheizte Pumpe 11 wird das Recyclingcaprolactam über einen Wärmetauscher 13 auf ≥200°C, bevorzugt 240°C-260°C, erhitzt und einer ersten Stufe zugeführt, die einen ersten Reaktor in Form eines Hydrolysator 20 aufweist.

Die Wärmeübertragung kann auch über ein in dem ersten Hydrolysator 20 befindliches Wärmeregister realisiert werden, wie dies weiter unten anhand weiterer Ausführungsbeispiele erläutert wird. Dann entfällt die Vorschaltung eines Wärmetauschers vor den ersten Hydrolysator 20.

Der erste Hydrolysator 20 ist vorzugsweise ein doppelmantelbeheizter Druckbehälter. Der Hydrolysator 20 kann in Abhängigkeit von einer externen Vorwärmung des Recyclingcaprolactams mit und ohne Heizungseinbauten ausgerüstet werden.

Die Besonderheit dieses ersten Hydrolysators 20 liegt darin, dass das wasserhaltige Recyclingcaprolactam über einen im Kopf befindlichen Diffusor 21 in den Hydrolysator 20 eingebracht wird.

Das erhitzte Recyclingcaprolactam baut entsprechend des Wassergehaltes und der eingestellten Produkttemperatur einen Druck in dem Hydrolysator 20 auf. Bei den hohen Wassergehalten im Recyclingcaprolactam stellen sich bei den vorstehend genannten bevorzugten Temperaturen Drücke von 25-47 bar ein.

Die Verweilzeit der Schmelze in dem Hydrolysator 20 wird so eingestellt, dass die folgenden definierten verlustarmen Entgasungsbedingungen für ein Recyclingcaprolactam annähernd erreicht werden:
a.) Maximaler Anteil der zyklischen Monomeren für eine verlustarme Entgasung eines Hydrolysators ≤30% bezogen auf den Gesamtextrakt des Recyclingcaprolactams.
b.) Optimierter Anteil der zyklischen Monomeren für eine verlustarme Entgasung eines Hydrolysators ≤25% bezogen auf den Gesamtextrakt des Recyclingcaprolactams.

Bei einem 85%igen Ausgangsprodukt und Produkttemperaturen von 240°C-260°C ist die Verweilzeit im Hydrolysator 20 auf etwa ≥10 Minuten und ≤30 Minuten einzustellen.

Unter den eingestellten technologischen Bedingungen laufen in dem Recyclingcaprolactam vorwiegend Hydrolysereaktionen der zyklischen Moleküle ab. Die Kondensation der hydrolysierten Moleküle führt zu einem sehr niedrig polykondensierten Produkt.

Nach der Verweilzeit im Hydrolysator 20 wird das niedrig polykondensierte Produkt in eine zweite Stufe überführt, die einen vorzugsweise doppelmantelbeheizten zweiten Hydrolysator 30 aufweist.

Das Produkt aus dem ersten Hydrolysator 20 wird über einen Diffusor 40 in den zweiten Hydrolysator 30 geleitet.

In dem zweiten Hydrolysator 30 befindet sich eine Querheizung 31. Diese Querheizung 31 sollte kurz unterhalb des Schmelzniveaus in dem zweiten Hydrolysator 30 angeordnet werden.

Das Produkt wird im zweiten Hydrolysator 30 durch Zuführung von Wärme vorzugsweise auf der Produkttemperatur des ersten Hydrolysators 20 gehalten.

Der zweite Hydrolysator wird bei definierten, über eine Regelung mit einem Drucksensor 52 und einem Regelventil 34 geregelten Drücken entgast. Der Solldruck in dem zweiten Hydrolysator 30 ist eine Funktion des gewünschten Wassergehalts in einem den zwei Hydrolysestufen 20, 30 über eine Leitung 42 nachgeschalteten (nicht dargestellten) Vorpolymerisator. Prinzipiell ist der Solldruck so auszuwählen, dass im zweiten Hydrolysator 30 der Druck auf einen Wert geregelt wird, der 3 bis 15 bar niedriger ist als der Druck im ersten Hydrolysator 20.

Das caprolactamhaltige Kondensat wird über das Regelventil 34 und einen angeschlossenen Kondensator 36 in einen Lagerbehälter 37 überführt, der kreislaufgeführt über eine Leitung 41 mit den Extraktwasserbehältern der Gesamt-Produktionsanlage gekoppelt sein kann.

Die Extraktwässer werden vollständig wieder der Caprolactam-Rückgewinnungsanlage zugeführt.

Die Verweilzeit der Schmelze in dem zweiten Hydrolysator 30 ist unabhängig vom eingestellten Wassergehalt auf mindestens 4,5 Stunden einzustellen.

In dem zweiten Hydrolysator 30 laufen unter den eingestellten technologischen Bedingungen sowohl eine Hydrolyse der zyklischen Dimeren- und Oligomerenmoleküle als auch eine Kondensation der hydrolysierten Moleküle entsprechend dem eingestellten Wassergehalt bis zu einem Gleichgewichtszustand ab.

Die relative Lösungsviskosität LV (gemessen an 1 g PA/100ml (m/v) H₂SO₄ Lösung mit 96%iger (m/m) H₂SO₄ bei 25°C) kann in Abhängigkeit von der eingestellten Entgasung und Temperatur bis zu 1,6 eingestellt werden.

Nach der Verweilzeit im zweiten Hydrolysator 30 kann die Schmelze zur weiteren Polykondensation über die Leitung 42 in den über die Leitung 42 angeschlossenen Vorpolymerisator überführt werden.

Der freie Wassergehalt der Schmelze liegt bei Austritt aus dem zweiten Hydrolysator 30 in Abhängigkeit von dem verwendeten Durchsatz, der Temperatur, und der Entgasung - im Bereich von ≥6% und ≤15%.

### Ausführungsbeispiel 2

### Zweistufen-Hydrolyse mit verweilzeitabhängigem Vorwärmesystem und Entgasung in beiden Hydrolysatoren

Für die Herstellung von PA6 in einer kontinuierlichen Polykondensationslinie wird ein 85%iges Recyclingcaprolactam mit durchschnittlich 85% Extrakt und 15% freiem Wasser eingesetzt.

Mit einer beheizten Pumpe 111 wird das über eine Leitung 110 zugeführte Recyclingcaprolactam durch einen Wärmetauscher 113 auf eine Temperatur von ≥240°C, bevorzugt 250°C - 270°C, erhitzt. Der Wärmetauscher weist eine Temperaturregelung mit einem durch einen Temperatursensor gesteuerten Regelventil 116 für ein über Leitungen 117, 118 zugeführtes Heizmedium auf.

In dem Wärmetauscher 113 ist eine Verweilzeit zu gewährleisten, die eine Konzentration an zyklischen Monomeren ≤30 Gew% einstellt. Bei den genannten bevorzugten Temperaturen wird diese Konzentration nach Verweilzeiten von durchschnittlich 8-12 Minuten erreicht.

Danach wird die Schmelze zu der ersten Stufe mit einem ersten Hydrolysator 120 gefördert.

Hierzu wird das stark erhitzte wasserhaltige Recyclingcaprolactam von dem ersten Wärmetauscher 113 über eine Leitung 114 und einen Diffusor 121, der vorzugsweise von der im ersten Ausführungsbeispiel erläuterten Art ist, in den ersten Hydrolysator 120 eingebracht.

Dieser erste Hydrolysator 120 ist ein doppelmantelbeheizter Druckbehälter mit einer inneren, kurz unterhalb des Schmelzniveaus angeordneten Querheizung 122. In diesem Hydrolysator 120 kann die voreingestellte Produkttemperatur mittels der Querheizung 122 auch unter Entgasungsbedingungen aufrecht erhalten werden.

Das erhitzte und vorbehandelte Recyclingcaprolactam wird in dem ersten Hydrolysator 120 über eine Druckregelung mit einem über einen Drucksensor 154 gesteuertes Regelventil 142 geregelt entgast. Der Richtwert für die Entgasung ist so vorzugeben, dass die entsprechend des Wassergehalts und der Produkttemperatur aufgebauten Drücke von 25-47 bar um 3-5 bar niedriger eingestellt werden.

Alternativ kann auf den ersten Hydrolysator 120 auch ein Dephlegmator als Entgasungsvorrichtung mit nachgeschaltetem Regelventil 142 aufgesetzt werden. In diesem Fall kann das mit dem Kondensat austretende Caprolactam weitestgehend in den Hydrolysator 120 zurückgeführt werden. Das Kondensat aus dem Dephlegmator kann aufgrund des sehr niedrigen Caprolactamgehalts aus dem Gesamtprozess herausgeführt werden.

Die Verweilzeit in dem ersten Hydrolysator 120 sollte maximal 30 Minuten betragen.

Unter den genannten technologischen Bedingungen laufen in dem Recyclingcaprolactam in dem ersten Hydrolysator 120 Hydrolysereaktionen der zyklischen Dimeren- und Oligomerenmoleküle und auch Kondensationsreaktionen der hydrolysierten Moleküle ab.

Das caprolactamhaltige Kondensat aus der Entgasungsstrecke wird über das Regelventil 142 und einen angeschlossenen Kondensator 141 in einen Lagerbehälter 137 überführt, der auch das Kondensat eines noch zu beschreibenden zweiten Hydrolysators 130 der zweiten Stufe aufnimmt.

Die Kondensate werden vollständig der Caprolactam-Rückgewinnungsanlage zugeführt.

Nach der Verweilzeit im ersten Hydrolysator 120 wird das Produkt über ein Regelventil 132 und einen Diffusor 140 in den zweiten Hydrolysator 130 überführt der ein nur mantelbeheizter Hydrolysator sein kann.

In dem zweiten Hydrolysator 130 befindet sich bei dieser Ausführungsform keine weitere Heizung.

Die Produkttemperatur im zweiten Hydrolysator 130 wird auf der Produkttemperatur des ersten Hydrolysators 120 gehalten.

Der zweite Hydrolysator 130 wird über eine Regelung mit einem Regelventil 134 unter der Steuerung durch einen Drucksensor 152 auf definierte Drücke entgast. Der Solldruck für den zweiten Hydrolysator 130 richtet sich nach dem gewünschten Wassergehalt im über die Leitung 142 nachfolgenden Vorpolymerisator. Prinzipiell ist der Solldruck so auszuwählen, dass der im zweiten Hydrolysator 130 geregelte Druck 3 bis 10 bar niedriger ist, als im ersten Hydrolysator 120.

Das caprolactamhaltige Kondensat wird über das Regelventil 134 und einen angeschlossenen Kondensator 136 in den gemeinsamen Lagerbehälter 137 überführt, der kreislaufgeführt mit den Extraktwasserbehältern der Gesamt-Produktionsanlage gekoppelt ist.

Die Extraktwässer werden vollständig der Caprolactam-Rückgewinnungsanlage zugeführt.

Da das Kondensat bei diesem Ausführungsbeispiel des zweistufigen Hydrolyseverfahrens einen Caprolactamgehalt von ≤1% hat, kann das Kondensat auch einfach aus dem Prozess abgelassen werden.

Die Verweilzeit der Schmelze in dem zweiten Hydrolysator 130 ist unabhängig vom eingestellten Wassergehalt auf mindestens 4,5 h einzustellen.

In dem zweiten Hydrolysator 130 laufen unter den angegebenen technologischen Bedingungen sowohl eine Hydrolyse der zyklischen Moleküle als auch eine Kondensation der hydrolysierten Moleküle entsprechend dem eingestellten Wassergehalt bis zu einem Gleichgewichtszustand ab.

Die relative Lösungsviskosität LV (gemessen an 1 g PA/100ml (m/v) H₂SO₄ Lösung mit 96%iger (m/m) H₂SO₄ bei 25°C) kann in Abhängigkeit von der eingestellten Entgasung und Temperatur bis zu 1,8 eingestellt werden.

Nach der Verweilzeit im zweiten Hydrolysator 130 kann die Schmelze zur weiteren Polykondensation über eine Leitung 142, ein durch einen Durchfluss-Sensor 153 gesteuertes Regelventil 133 und eine Leitung 142 in den nachgeschalteten (nicht gezeigten) Vorpolymerisator überführt werden.

Der freie Wassergehalt der Schmelze liegt bei Austritt aus dem zweiten Hydrolysator 130 - je nach Fahrweise hinsichtlich Durchsatz, Temperatur, Entgasung - im Bereich von ≥5%, ≤15%.

### Ausführungsbeispiel 3

### Einstufen-Hydrolyse mit verweilzeitabhängigem Vorwärmesystem und gesteuerter Entgasung in dem Hydrolysereaktor

Für die Herstellung des PA6 in einer kontinuierlichen Polykondensationslinie wird ein 85%iges Recyclingcaprolactam mit durchschnittlich 85% Extrakt und 15% freiem Wasser eingesetzt.

Mit einer beheizten Pumpe 211 wird das über eine Leitung 210 zugeführte Recyclingcaprolactam durch einen Wärmetauscher 213 auf ≥240°C, bevorzugt 250°C - 270°C, erhitzt. Der Wärmetauscher weist eine Temperaturregelung mit einem durch einen Temperatursensor gesteuerten Regelventil 216 für ein über Leitungen 217, 218 zugeführtes Heizmedium auf.

In dem Wärmetauscher 213 ist eine Verweilzeit zu gewährleisten, die eine Konzentration an zyklischen Monomeren von ≤30 Gew% einstellt. Bei den genannten bevorzugten Temperaturen wird diese Konzentration nach 8-12 Minuten Verweilzeit erreicht.

Danach wird die Schmelze über eine Doppelmantel-Rohrleitung 214 in einen einzigen Hydrolysator 230 eingespeist.

Der Hydrolysator 230 ist ein doppelmantelbeheizter Druckbehälter mit einer inneren, kurz unterhalb des Schmelzniveaus angeordneten Querheizung 231. In diesem Hydrolysator 230 kann die voreingestellte Produkttemperatur mittels der Querheizung 231 auch unter Entgasungsbedingungen aufrecht erhalten werden.

Das erhitzte wasserhaltige Recyclingcaprolactam wird über einen Diffusor 221, der wiederum von der in dem ersten Ausführungsform beschriebenen Art sein kann, in den Hydrolysator 230 eingeleitet.

Das so vorbehandelte erhitzte Recyclingcaprolactam wird in dem Hydrolysator 230 geregelt entgast. Hierzu wird ein über einen Druckregler 252 gesteuertes Regelventil 234 verwendet. Die Entgasung kann so eingestellt werden, dass die entsprechend des Wassergehalts und der Produkttemperatur aufgebauten Drücke von 25-47 bar um 3-15 bar niedriger gehalten werden.

Das caprolactamhaltige Kondensat wird über das Regelventil 234 und einen angeschlossenen Kondensator 236 in einen Lagerbehälter 237 überführt, der kreislaufgeführt mit den Extraktwasserbehältern der Gesamt-Produktionsanlage gekoppelt ist.

Die Extraktwässer werden auch hier wieder vollständig der Caprolactam-Rückgewinnungsanlage zugeführt.

Die Verweilzeit der Schmelze ist unabhängig vom eingestellten Wassergehalt auf mindestens 4,5 h einzustellen.

In dem einstufigen Hydrolysator laufen unter den angegebenen technologischen Bedingungen sowohl eine Hydrolyse der zyklischen Dimeren- und Oligomerenmoleküle als auch eine Kondensation der hydrolysierten Moleküle entsprechend dem eingestellten Wassergehalt bis zu einem Gleichgewichtszustand ab.

Die relative Lösungsviskosität LV (gemessen an 1g PA/100ml (m/v) H₂SO₄ Lösung mit 96%iger (m/m) H₂SO₄ bei 25°C) kann in Abhängigkeit von der eingestellten Entgasung und Temperatur bis zu 1,5 eingestellt werden.

Nach der Verweilzeit in dem Hydrolysator 230 kann die Schmelze zur weiteren Polykondensation über eine Leitung 242 und ein durch einen Durchfluss-Sensor 253 gesteuertes Regelventil 233 in den über die Leitung 242 nachgeschalteten Vorpolymerisator überführt werden.

Der freie Wassergehalt der Schmelze liegt bei Austritt aus dem Hydrolysator 230 je nach Fahrweise hinsichtlich Durchsatz, Temperatur, Entgasung im Bereich von ≥6% bis ≤15%.

### Ausführungsbeispiel 4

### Zweistufen-Hydrolyse mit Vorwärmesystem ohne Verweilzeiteinstellung vor dem zweiten Hydrolysereaktor und gesteuerter Entgasung in der zweiten Hydrolysestufe

Für die Herstellung von PA6 in einer kontinuierlichen Polykondensationslinie wird ein 85%iges Recyclingcaprolactam mit durchschnittlich 85% Extrakt und 15% freiem Wasser eingesetzt.

Mit einer beheizten Pumpe 311 wird das über eine Leitung 310 zugeführte Recyclingcaprolactam mit einer Lagertemperatur von 115-130°C (optimal 125°C) in eine erste Stufe mit einem ersten Hydrolysator 320 gefördert.

Der erste Hydrolysator 320 ist ein doppelmantelbeheizter Druckbehälter mit einer inneren, kurz unterhalb des Schmelzniveaus angeordneten Querheizung 321.

In diesem ersten Hydrolysator 320 wird das Recyclingcaprolactam auf die Produkttemperatur von 240-260°C mittels der Querheizung 321, die beispielsweise ein Röhrenbündel sein kann, eingestellt.

Das erhitzte Recyclingcaprolactam baut entsprechend des Wassergehaltes und der eingestellten Produkttemperatur einen Druck in dem ersten Hydrolysator 320 auf. Bei den hohen Wassergehalten im Recyclingcaprolactam stellen sich bei den genannten bevorzugten Temperaturen Drücke von 25-47 bar ein.

Prinzipiell wird der erste Hydrolysator 320 nicht entgast. Eine Entgasung des ersten Hydrolysator 320 wird nur dann vorgenommen, wenn der Druck aufgrund des Wassergehaltes auf >50 bar ansteigt.

Die Verweilzeit in dem ersten Hydrolysator 320 beträgt minimal 30 Minuten und sollte 2,0 Stunden nicht übersteigen.

Unter den angegebenen technologischen Bedingungen laufen in dem Recyclingcaprolactam im ersten Hydrolysator 320 vorwiegend Hydrolysereaktionen der zyklischen Monomeren-, Dimeren- und Oligomerenmoleküle und auch Kondensationsreaktionen ab, die gewährleisten, dass die Konzentration an zyklischen Monomeren auf ≤30Gew% eingestellt wird. Es entsteht ein sehr niedrigviskoses polymeres Produkt.

Nach der Verweilzeit im ersten Hydrolysator 320 durchläuft das Produkt einen Vorwärmer 313.

Im Vorwärmer 313 wird das hydrolysierte Recyclingcaprolactam über eine Temperaturregelung mit einem durch einen Temperatursensor 323 gesteuerten Regelventil 323 für ein über Leitungen 317, 318 zugeführtes Wärmeträgermedium auf ≥260°C und ≤275°C, bevorzugt 260°C-270°C erhitzt.

Danach wird das vorbehandelte, erhitzte Produkt über einen Diffusor, der wiederum von der in dem ersten Ausführungsbeispiel beschriebenen Art sein kann, in einen zweiten Hydrolysator 330 der zweiten Stufe überführt.

Der zweite Hydrolysator 330 ist ein doppelmantelbeheizter Druckbehälter mit einer inneren, kurz unterhalb des Schmelzniveaus Querheizung 331, beispielsweise einem Heizregister. In diesem zweiten Hydrolysator 330 kann die voreingestellte Produkttemperatur von 260-270/275°C mittels der Querheizung 331 auch unter Entgasungsbedingungen aufrecht erhalten werden.

Der zweite Hydrolysator 330 wird über ein von einem Drucksensor 352 gesteuertes Regelventil 334 auf definierte Drücke entgast. Die Druckvorgabe für den zweiten Hydrolysator 330 richtet sich nach dem gewünschten Wassergehalt im Hydrolysator. Prinzipiell ist die Druckvorgabe so auszuwählen, dass der im zweiten Hydrolysator 330 angesteuerte Druck 3 bis 15 bar niedriger ist als im ersten Hydrolysator 320.

Die Verweilzeit der Schmelze in dem zweiten Hydrolysator 330 ist unabhängig vom eingestellten Wassergehalt auf mindestens 3,5 h bis 5,5 h einzustellen.

In dem zweiten Hydrolysator 330 laufen unter den angegebenen technologischen Bedingungen weiterhin sowohl die Hydrolyse der zyklischen Moleküle als auch eine Kondensation der hydrolysierten Moleküle entsprechend dem eingestellten Wassergehalt bis zu einem Gleichgewichtszustand ab. Der zyklische Dimerengehalt wird in dem chemischen Gleichgewicht bis auf kleiner 0,15% abgesenkt.

Das caprolactamhaltige Kondensat wird über das Regelventil 334 und einen angeschlossenen Kondensator 336 in einen Lagerbehälter 337 überführt, der kreislaufgeführt mit den Extraktwasserbehältern der Gesamt-Produktionsanlage gekoppelt ist.

Die Extraktwässer werden vollständig der Caprolactam-Rückgewinnungsanlage zugeführt.

Die relative Lösungsviskosität LV (gemessen an 1 g PA/100ml (m/v) H₂SO₄ Lösung mit 96%iger (m/m) H₂SO₄ bei 25°C) kann in Abhängigkeit von der eingestellten Entgasung und Temperatur bis zu 1,6 eingestellt werden.

Nach der Verweilzeit im zweiten Hydrolysator 330 kann die Schmelze zur weiteren Polykondensation über eine Leitung 332 und ein von einem Durchfluss-Sensor 353 gesteuertes Regelventil 333 in einen nachgeschalteten (nicht dargestellten) Vorpolymerisator überführt werden.

Der freie Wassergehalt der Schmelze liegt bei Austritt aus dem zweiten Hydrolysator 330 - je nach Betriebsweise hinsichtlich Durchsatz, Temperatur, Entgasung - im Bereich von ≥6,0% bis ≤15%.

### Ausführungsbeispiel V

### Zweistufen-Hydrolyse mit Vorschaltung einer Druckerhöhungspumpe vor dem Vorwärmsystem ohne Verweilzeiteinstellung zu dem zweiten Hydrolysator und gesteuerter Entgasung in der zweiten Hydrolysestufe

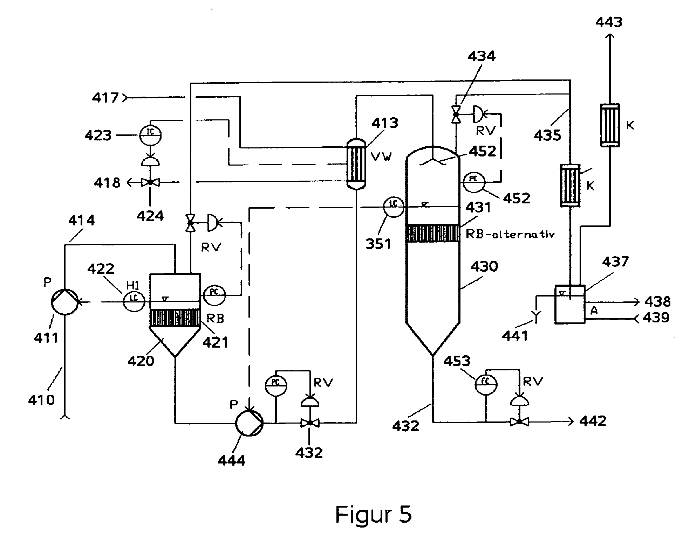

Das in Figur 5 gezeigte Ausführungsbeispiel entspricht weitgehend dem Ausführungsbeispiel 4.

Hierbei wird für die Herstellung von PA6 in einer kontinuierlichen Polykondensationslinie ein 85%iges Recyclingcaprolactam mit durchschnittlich 85% Extrakt und 15% freiem Wasser eingesetzt.

Mit einer beheizten Pumpe 411 wird das über eine Leitung 410 zugeführte Recyclingcaprolactam mit einer Lagertemperatur von 115°C-30°C (optimal 125°C) in eine erste Stufe mit einem ersten Hydrolysator 420 gefördert. Der erste Hydrolysator 420 ist ein doppelmantelbeheizter Druckbehälter mit einer inneren, kurz unterhalb des Schmelzniveaus angeordneten Querheizung 421.

In diesem ersten Hydrolysator 420 wird das Recyclingcaprolactam auf die Produkttemperatur von 240°C-260°C mittels der Querheizung 421, die beispielsweise ein Röhrenbündel sein kann, eingestellt.

Das erhitzte Recyclingcaprolactam baut entsprechend des Wassergehalts und der eingestellten Produkttemperatur einen Druck in dem ersten Hydrolysator 420 auf. Bei den hohen Wassergehalten im Recyclingcaprolactam stellen sich bei den genannten bevorzugten Temperaturen Drücke von 25-47 bar ein.

Prinzipiell wird der erste Hydrolysator 420 nicht entgast. Eine Entgasung des ersten Hydrolysators 420 wird nur dann vorgenommen, wenn der Druck aufgrund des Wassergehalts auf ≥50 bar ansteigt.

Die Verweilzeit in dem ersten Hydrolysator 420 beträgt maximal 30 Minuten und sollte 2,0 Stunden nicht übersteigen. Unter den angegebenen technologischen Bedingungen laufen in dem Recyclingcaprolactam in dem ersten Hydrolysator 420 vorwiegend Hydrolysereaktionen der zyklischen nonomeren-, dimeren- und oligomeren Moleküle und auch Kondensationsreaktionen ab, die gewährleisten, dass die Konzentration an zyklischen Monomeren auf ≤30 Gewichtsprozent eingestellt wird.

Bei sehr hohen Wassergehalten in dem Recyclingcaprolactam entsteht ein Prepolymerisat mit sehr niedriger Viskosität. Eine vor einem Regelventil 432 vorgeschaltete Pumpe erhöht den Schmelzedruck Δp um mindestens +3 bar. Dadurch wird gewährleistet, dass das Regelventil 432 auch bei sehr niedriger Schmelzeviskosität eine korrekte Regelung der Schmelzemenge und damit des Niveaus in dem Hydrolysator 430 vornehmen kann.

Nach der Verweilzeit in dem ersten Hydrolysator 420 durchläuft das Produkt einen Vorwärmer 413.

In dem Vorwärmer 413 wird das hydrolysierte Recyclingcaprolactam über eine Temperaturregelung mit einem durch einen Temperatursensor 423 für ein über Leitungen 317, 318 zugeführtes Wärmeträgermedium auf ≥260°C und ≤275°C, bevorzugt 260°C-270°C, erhitzt.

Danach wird das vorbehandelte erhitzte Produkt über einen Diffusor 452 in den Hydrolysator 430 der zweiten Stufe überführt. Hinsichtlich der Eigenschaften und der Prozessführung in dem zweiten Hydrolysator 430 wird auf die entsprechenden Ausführungen hinsichtlich des Ausführungsbeispiels 4 verwiesen, wobei die hierbei verwendeten Bezugsziffern des vierten Ausführungsbeispiels um jeweils 100 zu erhöhen sind.

## Patentansprüche

1. Verfahren zur kontinuierlichen Herstellung von Polyamid 6 unter Verwendung von Recyclingcaprolactam, zurückgewonnen aus Extraktions- und Kondensationswässern einer oder mehrerer PA6-Polykondensations- und Aufbereitungslinien, **dadurch gekennzeichnet, dass**
die zyklischen Verbindungen in dem Recyclingcaprolactam bei definierten Produkttemperaturen von ≥200°C bis zu einem Gleichgewichtszustand hydrolysiert werden, der eine verlustarme Entgasung der wasserhaltigen Schmelze erlaubt,
die Entgasung des hoch wasserhaltigen Recyclingcaprolactams erst nach Erreichen eines definierten Hydrolysezustandes in der wasserhaltigen Schmelze begonnen wird,
die Entgasung bis zu dem gewünschten Wassergehalt in der Schmelze über den Druck in dem Hydrolysesystem geregelt wird, und
über die Produkttemperatur und die Verweilzeit bei dem eingestellten Wassergehalt eine Hydrolyse der zyklischen Verbindungen und eine Prepolymerisation in dem Recyclingcaprolactam und damit eine Viskositätserhöhung in dem Reaktionsprodukt erreicht wird.

2. Verfahren nach Anspruch 1, **dadurch gekennzeichnet, dass** die definierte Produkttemperatur für eine Hydrolyse bis zu einem Gleichgewichtszustand für eine verlustarme Entgasung der wasserhaltigen Schmelze im Bereich von 240°C-270°C liegt.

3. Verfahren nach Anspruch 1 oder 2, **dadurch gekennzeichnet, dass** der definierte Hydrolysezustand für eine verlustarme Entgasung des wasserhaltigen Recyclingcaprolactams einem Anteil an zyklischen Monomeren von kleiner oder gleich 30% und vorzugsweise von kleiner als 25% im Recyclingcaprolactam entspricht.

4. Verfahren nach einem der Ansprüche 1 bis 3, **dadurch gekennzeichnet, dass** das Recyclingcaprolactam ein hoch wasserhaltiges Recyclingcaprolactam mit einer Konzentration von durchschnittlich 85% Extrakt ist, das bei Temperaturen von 120°C bis 130°C gelagert wurde.

5. Verfahren nach Anspruch 4, **dadurch gekennzeichnet, dass** der freie Wassergehalt in dem Recyclingcaprolactam ≤15% beträgt.

6. Verfahren nach einem der vorhergehenden Ansprüche, **dadurch gekennzeichnet, dass**
das Recyclingcaprolactam in einem Vorwärmsystem oder Hydrolysereaktor auf die definierte Produkttemperatur gebracht wird,
die Verweilzeit bei der Produkttemperatur so lange gehalten wird, bis die Schmelze einen definierten Hydrolysezustand erreicht hat.

7. Verfahren nach einem der vorhergehenden Ansprüche, **dadurch gekennzeichnet, dass** der Eintrag des hoch wasserhaltigen, erhitzten Recyclingcaprolactams in die Hydrolysatorreaktoren über eine Diffusoreinrichtung erfolgt.

8. Verfahren nach Anspruch 7, **dadurch gekennzeichnet, dass** die Diffusoreinrichtung eine nach unten offene konische Form mit einem Winkel-/Höhenverhältnis des konischen Auslaufes aufweist, das in Abhängigkeit von der aus der Schmelze zu verdampfenden Wassermenge gewählt ist.

9. Verfahren nach einem der vorhergehenden Ansprüche, **dadurch gekennzeichnet, dass** die Hydrolyse und die Entgasung als einstufiger Prozess durchgeführt wird.

10. Verfahren nach Anspruch 9, **dadurch gekennzeichnet, dass**
erst nach Erreichen des definierten Hydrolysezustandes in dem hoch wasserhaltigen Recyclingcaprolactam eine gesteuerte Entgasung des Hydrolysereaktors vorgenommen wird,
die Hydrolyse-Verweilzeit auf mindestens 5,5 Stunden gehalten wird,
die Steuerung der Kondensatentgasung über den Systemdruck erfolgt und anhand des im Vorpolymerisator gewünschten Wassergehalts und Propolymerisationszustandes der aktivierten Polyamidbildner geregelt wird,
der freie Wassergehalt der Schmelze bei Austritt aus dem Dimerenhydrolysator in Abhängigkeit von der Verfahrensführung hinsichtlich Durchsatz, Temperatur, Entgasung im Bereich von ≤15% bis ≥5% einstellbar ist.

11. Verfahren nach einem der Ansprüche 1 bis 8, **dadurch gekennzeichnet, dass** die Hydrolyse und die Entgasung als zweistufiger Prozess durchgeführt wird und die Entgasung in der zweiten oder beiden Stufen erfolgt.

12. Verfahren nach Anspruch 10, **dadurch gekennzeichnet, dass**
erst nach Erreichen des definierten Hydrolysezustandes in dem hoch wasserhaltigen Recyclingcaprolactam eine gesteuerte Entgasung des Hydrolysereaktors vorgenommen wird,
die Hydrolyse-Verweilzeit auf 0,5 Stunden im ersten Hydrolysator und mindestens 4,5 Stunden im zweiten Hydrolysator gehalten wird,
die Steuerung der Kondensatentgasung über den Systemdruck erfolgt und anhand des im Vorpolymerisator gewünschten Wassergehalts und Propolymerisationszustandes der aktivierten Polyamidbildner geregelt wird,
der freie Wassergehalt der Schmelze bei Austritt aus dem Dimerenhydrolysator in Abhängigkeit von der Verfahrensführung hinsichtlich Durchsatz, Temperatur, Entgasung im Bereich von ≤15% bis ≥5% einstellbar ist.

13. Verfahren nach Anspruch 11 oder 12, **dadurch gekennzeichnet, dass**
der erste Hydrolysereaktor über einen Dephlegmator mit Rückführung des austretenden Caprolactams entgast wird,
das gesamte austretende Kondensatwasser gesammelt und in eine Caprolactam-Rückgewinnungsanlage überführt wird.

14. Vorrichtung zur kontinuierlichen Herstellung von Polyamid 6 unter Verwendung von Recyclingcaprolactam, zurückgewonnen aus Extraktions- und Kondensationswässern einer oder mehrerer PA6-Polykondensations- und Aufbereitungslinien, **dadurch gekennzeichnet, dass** die Vorrichtung Folgendes aufweist:
eine Vorwärmeinrichtung zur Vorwärmung des Recyclingcaprolactams auf eine Hydrolysetemperatur;
einen Hydrolysator, dem das Recyclingcaprolactam aus der Vorwärmeinrichtung über eine Diffusoreinrichtung zugeführt wird und in dem bei vorgegebenem Druck und vorgegebener Temperatur eine Hydrolyse der zyklischen Verbindungen des Recyclingcaprolactams und eine Prepolymerisation abläuft, wobei der Hydrolysator mit einer Entgasungsvorrichtung versehen ist;
Heizeinrichtungen zur Aufheizung des Hydrolysators auf die vorgegebene Produkttemperaturen und Halten der Produkttemperatur zum Hydrolysieren der zyklischen Verbindungen in dem Recyclingcaprolactam bis zu einem Gleichgewichtszustand, der eine verlustarme Entgasung der wasserhaltigen Schmelze erlaubt,
Regeleinrichtungen zur Regelung der Entgasung des Hydrolysators bei vorgegebenen Drücken nach Erreichen eines definierten Hydrolysezustandes in der wasserhaltigen Schmelze;
wobei die Entgasung bis zu dem gewünschten Wassergehalt in der Schmelze über den Druck in dem Hydrolysesystem geregelt wird und über die Produkttemperatur und die Verweilzeit bei dem eingestellten Wassergehalt eine Hydrolyse der zyklischen Verbindungen und eine Prepolymerisation in dem Recyclingcaprolactam und damit eine Viskositätserhöhung in dem Reaktionsprodukt erreicht wird.

15. Vorrichtung nach Anspruch 14, **dadurch gekennzeichnet, dass** der Hydrolysator ein zweistufiger Hydrolysator ist.

16. Vorrichtung nach Anspruch 14 oder 15, **dadurch gekennzeichnet, dass** die Diffusoreinrichtung eine nach unten offene konische Form mit einem Winkel-/Höhenverhältnis des konischen Auslaufes aufweist, das in Abhängigkeit von der aus der Schmelze zu verdampfenden Wassermenge gewählt ist.

## Claims

1. A method for continuously producing polyamide 6 using recycled caprolactam obtained from extraction and condensation waters of one or more PA6 polycondensation and preparation lines, **characterised in that**
the cyclic compounds in the recycled caprolactam are hydrolysed at defined product temperatures of ≥ 200 °C as far as an equilibrium state, which allows low-loss degassing of the aqueous melt,
the degassing of the highly aqueous recycled caprolactam is started only once a defined hydrolysis state in the aqueous melt has been reached,
the degassing as far as the desired water content in the melt is controlled via the pressure in the hydrolysis system, and
a hydrolysis of the cyclic compounds and a prepolymerisation in the recycled caprolactam and therefore a viscosity increase in the reaction product is obtained via the product temperature and the residence time at the set water content.

2. The method according to claim 1, **characterised in that** the defined product temperature for a hydrolysis as far as an equilibrium state for low-loss degassing of the aqueous melt lies in the range of 240 °C - 270 °C.

3. The method according to claim 1 or 2, **characterised in that** the defined hydrolysis state for low-loss degassing of the aqueous recycled caprolactam corresponds to a proportion of cyclic monomers of less than or equal to 30 % and preferably of less than 25 % in the recycled caprolactam.

4. The method according to one of claims 1 to 3, **characterised in that** the recycled caprolactam is a highly aqueous recycled caprolactam with a concentration of, on average, 85 % extract, which has been stored at temperatures from 120 °C to 130 °C.

5. The method according to claim 4, **characterised in that** the free water content in the recycled caprolactam is ≤ 15 %.

6. The method according to one of the preceding claims, **characterised in that**
the recycled caprolactam is brought to the defined product temperature in a pre-heating system or hydrolysis reactor,
the residence time at the product temperature is maintained until the melt has reached a defined hydrolysis state.

7. The method according to one of the preceding claims, **characterised in that** the highly aqueous, heated recycled caprolactam is introduced into the hydrolyser reactors via a diffusor device.

8. The method according to claim 7, **characterised in that** the diffusor device has a downwardly open conical form with an angle/height ratio of the conical outlet which is selected depending on the quantity of water to be evaporated from the melt.

9. The method according to one of the preceding claims, **characterised in that** the hydrolysis and the degassing are carried out as a one-stage process.

10. The method according to claim 9, **characterised in that**
a controlled degassing of the hydrolysis reactor is performed only once the defined hydrolysis state in the highly aqueous recycled caprolactam has been reached,
the hydrolysis residence time is held at least at 5.5 hours,
the condensate degassing is controlled via the system pressure and is regulated on the basis of the desired water content in the prepolymeriser and prepolymerisation state of the activated polyamide creator,
the free water content of the melt on exit from the dimer hydrolyser can be set in the range from ≤ 15 % to ≥ 5 % depending on the execution of the method in terms of throughput, temperature and degassing.

11. The method according to one of claims 1 to 8, **characterised in that** the hydrolysis and the degassing are carried out as a two-stage process and the degassing is performed in the second stage or in both stages.

12. The method according to claim 10, **characterised in that**
a controlled degassing of the hydrolysis reactor is performed only once the defined hydrolysis state in the highly aqueous recycled caprolactam has been reached,
the hydrolysis residence time is held at 0.5 hours in the first hydrolyser and at least 4.5 hours in the second hydrolyser,
the condensate degassing is controlled via the system pressure and is regulated on the basis of the desired water content in the prepolymeriser and polymerisation state of the activated polyamide creator,
the free water content of the melt on exit from the dimer hydrolyser can be set from ≤ 15 % to ≥ 5 % depending on the execution of the method in terms of throughput, temperature and degassing.

13. The method according to claim 11 or 12, **characterised in that**
the first hydrolysis reactor is degassed via a dephlegmator with return of the exiting caprolactam,
the entire exiting condensate water is collected and transferred into a caprolactam recovery facility.

14. An apparatus for continuously producing polyamide 6 with use of recycled caprolactam, obtained from extraction and condensation waters of one or more PA6 polycondensation and preparation lines, **characterised in that** the apparatus comprises the following:
a pre-heating device for pre-heating the recycled caprolactam to a hydrolysis temperature;
a hydrolyser, to which the recycled caprolactam is fed from the pre-heating device via a diffusor device and in which a hydrolysis of the cyclic compounds of the recycled caprolactam and a prepolymerisation take place at predefined pressure and predefined temperature,
wherein the hydrolyser is provided with a degassing apparatus;
heating devices for heating the hydrolyser to the predefined product temperatures and holding the product temperature for hydrolysing the cyclic compounds in the recycling caprolactam as far as an equilibrium state, which allows low-loss degassing of the aqueous melt,
control devices for controlling the degassing of the hydrolyser at predefined pressures once a defined hydrolysis state in the aqueous melt has been reached;
wherein the degassing as far as the desired water content in the melt is regulated via the pressure in the hydrolysis system and a hydrolysis of the cyclic compounds and a prepolymerisation in the recycled caprolactam and therefore a viscosity increase in the reaction product is achieved via the product temperature and the residence time at the set water content.

15. The apparatus according to claim 14, **characterised in that** the hydrolyser is a two-stage hydrolyser.

16. The apparatus according to claim 14 or 15, **characterised in that** the diffusor device has a downwardly open conical form with an angle/height ratio of the conical discharge which is selected depending on the quantity of water to be evaporated from the melt.

## Revendications

1. Procédé de production continue de polyamide 6 en mettant en oeuvre du caprolactame de recyclage qui a été récupéré à partir des eaux d'extraction et de condensation d'une ou de plusieurs lignes destinées à la polycondensation et au traitement ultérieur de PA6, **caractérisé en ce que**
les composés cycliques, contenus dans le caprolactame de recyclage, sont soumis à une hydrolyse réalisée à des températures de produit définies ≥ 200 °C jusqu'à atteindre un état d'équilibre permettant de dégazer le produit fondu contenant de l'eau sans que celui-ci subisse de pertes importantes,
le dégazage du caprolactame de recyclage à haute teneur en eau n'est commencé qu'après l'établissement d'un état d'hydrolyse défini au sein du produit fondu contenant de l'eau,
le dégazage est réglé, à travers la pression dans le système d'hydrolyse, jusqu'à atteindre au sein dudit produit fondu la teneur en eau souhaitée, et
à la teneur en eau ainsi ajustée, la température de produit et la durée de séjour permettant d'obtenir, au sein du caprolactame de recyclage, une hydrolyse des composés cycliques et une pré-polymérisation se traduisant par une augmentation de la viscosité au sein du produit de la réaction.

2. Procédé selon la revendication 1, **caractérisé en ce que** la température de produit, définie en vue d'une hydrolyse réalisée jusqu'à atteindre un état d'équilibre permettant de dégazer le produit fondu contenant de l'eau sans que celui-ci subisse de pertes importantes, est comprise entre 240 °C et 270 °C.

3. Procédé selon les revendications 1 ou 2, **caractérisé en ce que** l'état d'hydrolyse, défini dans l'objectif de permettre un dégazage du caprolactame de recyclage contenant de l'eau sans que celui-ci subisse de pertes importantes, correspond à une proportion de monomères cycliques inférieure ou égale à 30 % et préférentiellement inférieure à 25 % au sein du caprolactame de recyclage.

4. Procédé selon l'une des revendications 1 à 3, **caractérisé en ce que** le caprolactame de recyclage est un caprolactame de recyclage à haute teneur en eau dont la concentration en extrait s'élève en moyenne à 85 % et lequel a été stocké à des températures comprises entre 120 °C et 130 °C.

5. Procédé selon la revendication 4, **caractérisé en ce que** le caprolactame de recyclage présente une teneur en eau libre ≤ 15 %.

6. Procédé selon l'une des revendications précédentes, **caractérisé en ce que**
le caprolactame de recyclage est porté à la température de produit définie au sein d'un système de préchauffage ou d'un réacteur d'hydrolyse,
la durée de séjour à la température de produit est prolongée jusqu'à ce que ledit produit fondu ait atteint un état d'hydrolyse défini.

7. Procédé selon l'une des revendications précédentes, **caractérisé en ce que** le caprolactame de recyclage à haute teneur en eau est chauffé puis introduit dans les réacteurs d'hydrolyse au moyen d'un organe de diffusion.

8. Procédé selon la revendication 7, **caractérisé en ce que** l'organe de diffusion présente une forme conique ouverte vers la bas, l'organe verseur conique ayant un rapport angle/hauteur choisi en fonction de la quantité d'eau à évaporer à partir du produit fondu.

9. Procédé selon l'une des revendications précédentes, **caractérisé en ce que** l'hydrolyse et le dégazage sont mis en oeuvre selon un processus à étape unique.

10. Procédé selon la revendication 9, **caractérisé en ce que**
le réacteur d'hydrolyse n'est soumis à un dégazage contrôlé qu'après l'établissement de l'état d'hydrolyse défini au sein du caprolactame de recyclage à haute teneur en eau,
la durée de séjour en vue d'une hydrolyse est d'au moins 5,5 heures,
le dégazage du condensat est contrôlé à travers la pression dans le système et réglé au moyen de la teneur en eau telle que souhaitée au sein de l'organe de pré-polymérisation ainsi qu'au moyen de l'état de propolymérisation des précurseurs de polyamide activés,
à la sortie de l'organe d'hydrolyse de dimères, le produit fondu présente une teneur en eau libre pouvant être ajustée à une valeur comprise entre ≤ 15 % et ≥ 5 % en fonction de la mise en oeuvre dudit procédé en ce qui concerne le débit, la température et le dégazage.

11. Procédé selon l'une des revendications 1 à 8, **caractérisé en ce que** l'hydrolyse et le dégazage sont mis en oeuvre selon un processus en deux étapes et que le dégazage est mis en oeuvre dans la deuxième des deux étapes.

12. Procédé selon la revendication 10, **caractérisé en ce que**
le réacteur d'hydrolyse n'est soumis à un dégazage contrôlé qu'après l'établissement de l'état d'hydrolyse défini a été atteint au sein du caprolactame de recyclage à haute teneur en eau,
la durée de séjour en vue d'une hydrolyse est de 0,5 heures dans le premier organe d'hydrolyse et d'au moins 4,5 heures dans le deuxième organe d'hydrolyse,
le dégazage du condensat est contrôlé à travers la pression dans le système et réglé au moyen de la teneur en eau telle que souhaitée au sein de l'organe de pré-polymérisation ainsi qu'au moyen de l'état de propolymérisation des précurseurs de polyamide activés,
à la sortie de l'organe d'hydrolyse de dimères, le produit fondu présente une teneur en eau libre pouvant être ajustée à une valeur comprise entre ≤ 15 % et ≤ 5 % en fonction de la mise en oeuvre dudit procédé en ce qui concerne le débit, la température et le dégazage.

13. Procédé selon les revendications 11 ou 12, **caractérisé en ce que**
le premier réacteur d'hydrolyse est dégazé au moyen d'un déflegmateur en recyclant le caprolactame obtenu en sortie,
l'intégralité de l'eau de condensation obtenue en sortie est recueillie puis transférée dans une installation de récupération de caprolactame.

14. Dispositif de production continue de polyamide 6 en mettant en oeuvre du caprolactame de recyclage qui a été récupéré à partir des eaux d'extraction et de condensation d'une ou de plusieurs lignes destinées à la polycondensation et au traitement ultérieur de PA6, **caractérisé en ce que** ledit dispositif comporte les éléments suivants :
un organe de préchauffage destiné à préchauffer le caprolactame de recyclage à une température de hydrolyse ;
un organe d'hydrolyse dans lequel on introduit, au moyen d'un organe de diffusion, le caprolactame de recyclage en provenance de l'organe de préchauffage et dans lequel se déroule, à une pression préalablement définie et à une température préalablement définie, une hydrolyse des composés cycliques du caprolactame de recyclage ainsi qu'une pré-polymérisation,
l'organe d'hydrolyse étant pourvu d'un dispositif de dégazage ;
des organes de chauffage destinés à chauffer l'organe d'hydrolyse à une température de produit préalablement définie, la température de produit étant maintenue pour soumettre les composés cycliques contenues dans le caprolactame de recyclage à une hydrolyse jusqu'à atteindre un état d'équilibre permettant de dégazer le produit fondu contenant de l'eau sans que celui-ci subisse de pertes importantes,
des organes de réglage destinés à régler, après l'établissement d'un état d'hydrolyse prédéfini au sein du produit fondu contenant de l'eau, le dégazage de l'organe d'hydrolyse à des pressions préalablement définies ;
le dégazage étant réglé, à travers la pression dans le système d'hydrolyse, jusqu'à atteindre la teneur en eau souhaitée au sein du produit fondu, la température de produit et la durée de séjour permettant ensuite, à la teneur en eau ainsi ajustée, d'obtenir au sein du caprolactame de recyclage une hydrolyse des composés cycliques et une pré-polymérisation se traduisant par une augmentation de la viscosité au sein du produit de la réaction.

15. Dispositif selon la revendication 14, **caractérisé en ce que** l'organe d'hydrolyse est un organe d'hydrolyse comportant deux étages.

16. Dispositif selon les revendications 14 ou 15, **caractérisé en ce que** l'organe de diffusion présente une forme conique ouverte vers la bas, l'organe verseur conique ayant un rapport angle/hauteur choisi en fonction de la quantité d'eau à évaporer à partir du produit fondu.
